(19) Europäisches Patentamt
European Patent Office
Office européen des brevets

(11) **EP 3 118 171 B1**

(12) **EUROPEAN PATENT SPECIFICATION**

(45) Date of publication and mention
of the grant of the patent:
**31.10.2018 Bulletin 2018/44**

(51) Int Cl.:
**C03B 37/012** (2006.01)    **C03B 37/018** (2006.01)

(21) Application number: **16175188.8**

(22) Date of filing: **20.06.2016**

(54) **A METHOD FOR PREPARING A PRIMARY PREFORM BY ETCHING AND COLLAPSING A DEPOSITED TUBE**

VERFAHREN ZUR HERSTELLUNG EINER PRIMÄREN VORFORM DURCH ÄTZEN UND KOLLABIEREN EINES DEPONIERTEN ROHRS

PROCÉDÉ DE PRÉPARATION D'UNE PRÉFORME PRIMAIRE PAR ATTAQUE À L'ACIDE ET DE RETREINT D'UN TUBE DÉPOSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2015 NL 2015161**

(43) Date of publication of application:
**18.01.2017 Bulletin 2017/03**

(73) Proprietor: **Draka Comteq B.V.**
**1083 HJ Amsterdam (NL)**

(72) Inventors:
• **MILICEVIC, Igor**
  **1083 HJ Amsterdam (NL)**
• **HARTSUIKER, Johannes Antoon**
  **1083 HJ Amsterdam (NL)**
• **KRABSHUIS, Gertjan**
  **1083 HJ Amsterdam (NL)**
• **VAN STRALEN, Mattheus Jacobus Nicolaas**
  **1083 HJ Amsterdam (NL)**

(74) Representative: **Algemeen Octrooi- en Merkenbureau B.V.**
**P.O. Box 645**
**5600 AP Eindhoven (NL)**

(56) References cited:
WO-A1-2004/043870    JP-A- H01 183 433
KR-A- 20050 032 891    US-A- 4 854 956
US-A- 5 970 083    US-A1- 2008 028 799

**Description**

The present invention relates to a method for preparing a primary preform for an optical fiber by etching and collapsing a deposited tube.

The present invention relates to the field of optical fibers. More specifically, it relates to the field of manufacturing optical fibers by means of chemical vapor deposition (CVD) in which layers of silica are deposited on a substrate; examples thereof are modified chemical vapor deposition (MDVD), plasma-enhanced chemical vapor deposition (PECVD or PCVD) and outside vapor deposition (OVD).

A process to manufacture optical fibers generally comprises the following four steps. However, other steps may be present. In a first step a hollow tube (also called substrate tube) is subjected to an inside vapor deposition process to provide a deposited tube. In a second step, which is the step to which the method according to the present invention relates, this deposited tube is converted into a solid rod, a so-called primary preform, by heating the tube until it contracts and closes the central cavity. In a third step the primary preform thus obtained is converted into a so-called final preform by increasing its diameter through the application of an external layer of silica. In a fourth step, optical fibers are drawn from the primary or final preform.

As discussed above, typically after a hollow tube of vitrified silica layers have been obtained (first step), the tube is subsequently contracted by heating ("collapsing") into a solid rod, the primary preform (second step). In an embodiment, vitrified silica layers have been deposited onto the interior of a hollow silica tube and the tube comprising the vitrified silica layers is subsequently contracted by heating. In another embodiment, the hollow tube used as a substrate for the vitrified silica layers is first removed from the vitrified silica layers prior to the contraction by heating. In yet another embodiment, non vitrified silica layers are deposited on the outer surface of a cylindrical mandrel. After removal of the mandrel the non-vitrified silica is vitrified and subsequently contracted by heating. In all embodiments, a solid rod is obtained. The present invention is related to a method of collapsing. The primary preform obtained after collapsing may furthermore be externally provided with an additional amount of glass to increase the diameter thereof; for example by means of an external vapor deposition process or direct glass overcladding (so-called "overcladding") or by using one or more preformed glass tubes (so-called "sleeving"), thus obtaining a final preform (third step). From the final preform thus produced, one end of which is heated, optical fibers are obtained by drawing on a drawing tower (fourth step). The refractive index profile of the consolidated (final) preform corresponds to the refractive index profile of the optical fibre drawn from such a preform.

From US patent no. 5,970,083 a collapsing device is known comprising a graphite furnace which surrounds a cylindrical envelope, with a carrier tube being movable within the cylindrical envelope in the longitudinal direction thereof. Said device is used for collapsing a hollow rod approximately 30 mm in diameter, which must be transformed into a preform that can be used for drawing the optical fibre, that is, a solid rod having a diameter of approximately 20 mm. This transformation occurs principally towards the middle of the furnace (hot zone), where a temperature of approximately 2000 °C prevails. The cylindrical envelope comprises an inlet opening and an outlet opening, both openings including two rings of conduits through which a non-oxidizing gas is passed. Said annular conduits are inclined at an angle to the axial direction of the envelope, the non-oxidizing gas being injected in two conical gas curtains by the annular conduits. The gas that is thus injected is directed away from the envelope, such that any entry into the envelope of air that could cause combustion of the graphite furnace is prevented.

A disadvantage of this method is that impurities that are either present on the outside of the deposited tube (e.g. in the form of soot) and/or that are introduced during the collapsing process are incorporated into the outer glass layers of the primary preform during the collapsing step; soot may also form bubbles during the collapsing process which is undesirable. Therefore, there is a need for an improved collapsing method which provides primary preforms having a reduced contamination content.

From the International patent application WO 2004/043870 a method for manufacturing an optical fiber preform is known, which includes a dehydration process by photochemical reaction. The method performs forming a clad and a core according to a predetermined refractive index profile by repeated depositions and sintering of soot particles by means of oxidation of soot generation gas, and a dehydration step for removing moisture and hydroxyl groups from a soot deposition region by means of photochemical reaction. In this method, the outer surface of the optical fiber preform can be chemically etched using hydrogen fluoride, in order to remover impurities from the outer surface of the optical fiber preform.

From the US patent application US 2008/0028799 A1 a method for manufacturing an optical fiber preform is known, in which a clad layer is deposited at a large thickness, so that the ratio of the outer diameter of a core to the outer diameter of a deposited clad is more than 2.5 after a collapse at the deposition of a clad layer and a core. Moreover, this method describes etching the outer surface of the preform, before and after collapsing.

Document JP H01 183433 teaches setting a quartz glass protecting cylinder between the metallic elements and the preform, to prevent migration of the elements from the resonator.

It is an object of the present invention to provide a method for collapsing a deposited tube into a primary preform having reduced contamination. It is another object of the present invention to provide a modified collapsing process that provides improved quality of primary preforms without the need of extensive modification to the apparatuses used. One or more of these objects are achieved by the present invention by an etching and collapsing process.

Summary of the invention

The present invention relates to a method for preparing a primary preform for an optical fiber by etching and collapsing a deposited tube, said deposited tube being a tube comprising or being made of vitrified silica layers, wherein at least some of the vitrified silica layers comprise a dopant, the method comprising the steps of

* mounting a deposited tube on a lathe and introducing the deposited tube into a central aperture of a furnace mounted on the lathe wherein the furnace and the deposited tube are movable in axial direction with respect to each other;
* creating within the furnace a hot zone that moves in translation back and forth over the length of the tube during one or more cycles wherein:

- during at least one cycle at least part of the outside of the deposited tube is etched by supplying a fluorine-containing etching gas to an annular region between the outer surface of the deposited tube and the central aperture of the furnace; and
- during at least one cycle the deposited tube is collapsed;

in order to obtain a primary preform.

In an embodiment, the method comprises at least two cycles, preferably between 3 and 5 cycles. At least one of the cycles is a collapsing cycle and at least one of the cycles is a etching cycle. In an embodiment, at least one, preferably all, of the cycles are collapsing and etching cycles.

In an embodiment, the fluorine-containing gas is supplied during at least one, preferably all of the cycles.

In an embodiment, the fluorine-containing gas is supplied during the full cycle, viz. during the total duration of a cycle. In another embodiment, the fluorine-containing gas is supplied during part of the cycle, viz. during only part of the total duration of the cycle.

In another embodiment, the fluorine-containing etching gas is selected from $C_2F_6$, $C_4F_8$, $CF_4$, $CCl_2F_2$, $SF_6$, $NF_3$, $F_2$, and is preferably $C_2F_6$. Other known fluorine containing gases may be used.

In an embodiment, the fluorine-containing gas is free of oxygen, preferably having an oxygen content of less than 1 ppm.

In an embodiment, the fluorine-containing gas is mixed with an inert gas, such as argon.

In an embodiment, the fluorine-containing gas and the inert gas are both free of oxygen, preferably having an oxygen content of less than 1 ppm.

In an embodiment, the annular region is free of oxygen during the cycles, preferably having an oxygen content of less than 100 ppm, more preferably less than 10 ppm.

In an embodiment, the translation speed of movement of the furnace with respect to the deposited tube is between 15 and 45 mm/second, more preferably between 25 and 35 mm/second.

In an embodiment, the deposited tube is prepared by inside chemical vapor deposition on a hollow tube (in other words on a substrate tube), preferably a glass tube, more preferably a quartz tube.

In an embodiment, the temperature of the hot zone during an etch cycle wherein the outside of the deposited tube is etched is at least 1400 ° C, preferably at least 1500 °C.

In an embodiment, the temperature of the hot zone during a collapsing cycle wherein the deposited tube is collapsed is at least 1700 °C, preferably at least 1800 °C, more preferably at least 1900 °C.

In an embodiment, the temperature of the hot zone during an etching and collapsing cycle wherein the deposited tube is simultaneously etched and collapsed is at least 1700 °C, preferably at least 1800 °C, more preferably at least 1900 °C.

In another aspect, the present invention relates to a method of manufacturing an optical fiber according to claim 13.

The present invention will be discussed in more detail below.

Definitions as used in the present description

The following definitions are used in the present description and claims to define the stated subject matter. Other terms not cited below are meant to have the generally accepted meaning in the field.

"substrate tube" or "hollow tube" as used in the present description means: an hollow elongated tube having a cavity within used for inside chemical vapor deposition.

"deposited tube" as used in the present description means: a tube comprising or being made of vitrified silica layers, wherein at least some of the vitrified silica layers comprise a dopant. A deposited tube according to the present invention comprises a hollow tube in which several vitrified silica layers are provided in the inside surface thereof. In this case both the hollow tube as well as the vitrified silica layers applied during the inside chemical vapor deposition process make up the deposited tube. A deposited tube according to the present invention also comprises a design wherein the hollow tube on the inside surface of which several vitrified silica layers have been provided has been removed. In that case only the vitrified silica layers applied during the inside chemical vapor deposition process (but not the substrate tube) make up the deposited tube. A deposited tube according to the present invention also comprises a design wherein non-vitrified silica layers are deposited on the outer surface of a cylindrical mandrel. After removal of the mandrel the non-vitrified silica is vitrified by heating. A deposited tube may comprise handles in the form of tubes at one or both ends of the deposited tube.

"primary preform" as used in the present description means: a solid rod obtained by collapsing a deposited tube.

"final preform" as used in the present description means: a solid rod obtained by externally providing a primary preform with extra glass.

"inner surface" as used in the present description means: the inside surface or interior surface of the substrate tube.

"outer surface" as used in the present description means: the outer surface or outside surface of the deposited tube.

"glass" or "glass material" as used in the present description means: crystalline or vitreous (glassy) oxide material - e.g. silica ($SiO_2$) or quartz - deposited by means of a vapor deposition process. "silica" as used in the present description means: any substance in the form of SiOx, whether or not stoichiometric, and whether or not crystalline or amorphous, possibly comprising dopants.

"dopant" as used in the present description means: a compound or composition that is present in the glass of the optical fibre and that has an effect of the refractive index of said glass. It can for example be an down dopant, viz. a dopant decreasing the refractive index, such as fluorine or boron. It can for example be a up-dopant, viz. a dopant increasing the refractive index, such as germanium. Dopants can be present in the glass either in the interstices of the glass (e.g. in the case of fluorine) or they may be present as an oxide (e.g. in the case of germanium, aluminium, phosphorus or boron).

"the furnace and the deposited tube are movable in axial direction with respect to each other" as used in the present invention means that the furnace may move in axial direction over the deposited tube and/or that the deposited tube moves in axial direction inside the central aperture of the furnace. In other words, the furnace and the deposited tube move in view of each other. Preferably, the furnace moves over the deposited tube.

"hot zone" as used in the present description means: a zone inside the furnace that has a high temperature. The hot zone comprises part of the length of the deposited tube and is effected by the heat of the furnace; said hot zone is typically located in the middle of the furnace in axial direction.

"a hot zone that moves in translation back and forth over the length of the tube" as used in the present description means: that either by the movement of the furnace over the deposited tube of by the movement of the deposited tube inside of the central aperture of the furnace the hot zone moves back and forth. Even if the furnace (and hence the hot zone within in) are considered stationary and the deposited tube moves, this is considered to be a hot zone moving in translation back and forth according to the present invention.

"moved back and forth" as used in the present description means: a reciprocating movement or moving backwards and forwards in a straight line.

"cycle" as used in the present description means: a part of the etching and collapsing process defined by one forth and one back movement of the furnace along the length of the deposited tube or vice versa. The furnace starts at one end of the available length of the deposited tube, moves forth towards a reversal point near the other end of the available length of the deposited tube and then moves back towards the one end to complete one cycle. A cycle may be a collapsing cycle in which collapsing takes place but no etching; it may be a etching cycle in which etching takes place but no collapsing; or it may be an etching and collapsing cycle in with both etching and collapsing takes place simultaneously. Available length of the deposited tube is considered to be the length of the deposited tube over which the furnace may move, excluding both ends of the deposited tube that are mounted in the clamps of the lathe.

"soot" as used in the present description means: a glassy substance produced by incomplete vitrification of glass-forming compounds.

Detailed description of the invention

In the process of manufacturing optical fibers, after the inside vapor deposition process is finished, the deposited tube is mounted on a lathe. Normally both ends of the deposited tube are fastened by clamps. For collapsing, the deposited tube is locally heated (by the hot zone of the furnace) until a sufficiently high temperature is reached to soften the glass. When the glass starts to soften it assumes a smaller diameter and closes the central cavity. This process is carried out until the deposited tube is completely closed, viz. until the cavity is no longer present.

Unfortunately, due to the high temperature during this collapsing reaction and due to pollution coming from the furnace (e.g. copper from copper elements or iron, tungsten, nickel and/or chromium from the inoxidizable steel parts of the furnace) as well as from the environment (such as pollution present in the gases, such as hydrogen or methane), the outer glass surface of the primary preform is partly contaminated since the pollutants are entrapped in the glass upon cooling and solidifying. Moreover, soot already present on the deposited tube may provide bubbles in the glass upon collapsing. This contamination and/or bubbles may lead to increased attenuation in the optical fibre drawn from this primary preform. The present inventors have observed that contaminations by metals, such as copper and iron, is especially detrimental and might lead to a large increase in attenuation of the 1310 nm and 1550 band.

The present inventors have found a method to minimize this effect by applying an etching procedure at the outside of the deposited tube during the collapsing process (either prior to or simultaneous with or after the collapsing cycles). The present inventors have observed that the contamination during the start of the collapsing process is mainly present at and near the outer surface of the primary preform, for example in the outer 3/10 millimeters thereof. Moreover, the present inventors have observed, without wishing to be bound to any particular theory, that as the collapsing process proceeds, the contamination - especially the metal particles - tend to migrate radially through the glass more towards the center.

Methods of chemical wet etching, for example using HF are known, which wet etching is carried out after the collapsing process has finished. Wet etching is undesirable since HF is a very dangerous acid and it leaves the surface of the primary preform full of small dents and irregularities. The etching process after the collapsing process has finished might provide only limited results, since by means of such an etching procedure only the outer layer is removed whereas the contamination might have migrated radially inwards. Moreover, wet etching is carried out subsequent to the collapsing process, which introduces an additional processing step which is undesirable. The present method allows for etching prior to and/or simultaneously with and/or after collapsing which eliminates the need for an additional process step.

Etching of the inside of the deposited tube in order to remove some of the deposited glass layers is known from EP 0 117 009 which uses a mixture of oxygen and fluorine-containing gas.

The solution that the present inventors have found to the problems cited above of the prior art is to provide an in-situ outside etching process directly prior and/or simultaneous with and/or after the collapsing process in the lathe using a fluorine-containing etching gas. In other words, an etching process is combined with the collapsing process instead of separately from the collapsing process in an different device. Furthermore, the invention provides a etching process that comprises an etching gas instead of wet etching.

The present invention relates, in a first aspect, to a method for preparing a primary preform for an optical fiber by etching and collapsing a deposited tube, said deposited tube being a tube comprising or being made of vitrified silica layers, wherein at least some of the vitrified silica layers comprise a dopant, the method comprising the steps of

* mounting a deposited tube on a lathe and introducing the deposited tube into a central aperture of a furnace mounted on the lathe wherein the furnace and the deposited tube are movable in axial direction with respect to each other;
* creating within the furnace a hot zone that moves in translation back and forth over the length of the tube during one or more cycles wherein:

- during at least one cycle at least part of the outside of the deposited tube is etched by supplying a fluorine-containing etching gas to an annular region between the outer surface of the deposited tube and the central aperture of the furnace; and
- during at least one cycle the deposited tube is collapsed;

in order to obtain a primary preform.

In an embodiment of this aspect, this method comprising the steps of mounting a deposited tube on a lathe and introducing the deposited tube into a central aperture of a furnace mounted on the lathe wherein the furnace and the deposited tube are movable in axial direction with respect to each other; creating within the furnace a hot zone that moves in translation back and forth over the length of the tube during one or more cycles wherein: during at least one cycle at least part of the outside of the deposited tube is etched by supplying a fluorine-containing etching gas to an annular region between the outer surface of the deposited tube and the central aperture of the furnace; and subsequently, during at least one cycle the etched deposited tube is collapsed in order to obtain a primary preform.

In an embodiment of this aspect, this method comprising the steps of mounting a deposited tube on a lathe and introducing the deposited tube into a central aperture of a furnace mounted on the lathe wherein the furnace and the deposited tube are movable in axial direction with respect to each other; creating within the furnace a hot zone that moves in translation back and forth over the length of the tube during one or more cycles wherein: during at least one cycle the deposited tube is collapsed; and simultaneously at least part of the outside of the deposited tube is etched by supplying a fluorine-containing etching gas to an annular region between the outer surface of the deposited tube and the central aperture of the furnace in order to obtain a primary preform.

In an embodiment of this aspect, this method comprising the steps of mounting a deposited tube on a lathe and introducing the deposited tube into a central aperture of a furnace mounted on the lathe wherein the furnace and the deposited tube are movable in axial direction with respect to each other; creating within the furnace a hot zone that moves in translation back and forth over the length of the tube during one or more cycles wherein: during at least one cycle at least part of the outside of the deposited tube is etched by supplying a fluorine-containing etching gas to an annular region between the outer surface of the deposited tube and the central aperture of the furnace; and subsequently, during at least one cycle the deposited tube is collapsed and simultaneously at least part of the outside of the deposited tube is etched by supplying a fluorine-containing etching gas to the annular region between the outer surface of the deposited tube and the central aperture of the furnace in order to obtain a primary preform.

In an embodiment of this aspect, this method comprising the steps of mounting a deposited tube on a lathe and introducing the deposited tube into a central aperture of a furnace mounted on the lathe wherein the furnace and the deposited tube are movable in axial direction with respect to each other; creating within the furnace a hot zone that moves in translation back and forth over the length of the tube during one or more cycles wherein: during at least one cycle the deposited tube is collapsed and simultaneously at least part of the outside of the deposited tube is etched by supplying a fluorine-containing etching gas to an annular region between the outer surface of the deposited tube and the central aperture of the furnace; and subsequently during at least one cycle at least part of the outside of the primary preform thus obtained is etched by supplying a fluorine-containing etching gas to the annular region between the outer surface of the primary preform and the central aperture of the furnace.

The method according to the present invention usually comprises several cycles in which the furnace or the deposited tube are moved with respect to the other. The furnace induces a zone of high temperature (so-called hot zone) on part of the length of the deposited tube; said hot zone is typically located in the middle -axially- of the furnace. Such a hot zone usually has a length of between 5 and 20 centimeter, preferably between 7 and 15 centimeter depending on the furnace used.

It should be noted that there is a kind of a lag phase between the introduction of the fluorine-containing gas and the moment that it has an etching effect. The effect of this lag phase is the following. The etching is typically only observed - as empirically found by the present inventors - at an axial position that is the axial position at which the supply of the fluorine-containing gas is started plus approximately the width of the hot zone. A skilled person in the art will be able to determining that lag and adjust the starting and end point of the addition of the fluorine-containing gas.

The temperature of the hot zone that is preferred in order to effect the etching process with the fluorine-containing gas is at least 1400 °C, preferably at least 1500 °C. The temperature of the hot zone that is preferred in order to effect the collapsing process is at least 1700 °C, preferably at least 1800 °C, more preferably at least 1900 °C. In other words, the etching process will already take place at lower temperatures than the collapsing process. However, the etching may as well be carried out at the higher temperature of the collapsing process.

It is preferred that the temperature of the furnace during a collapsing cycle or a simultaneous etching and collapsing cycle is set so that the contracting of the deposited tube takes place within the processing range of the glass composition in question. In particular it is preferred that the temperature of the hot zone is below the melting point of the deposited support tube and above the softening temperature of the support tube. The combination of the temperature of the furnace and the movement of the furnace relative to the deposited tube or vice versa provides the temperature in the hot zone.

In case a cycle according to the present invention is an etching cycle, the temperature of the hot zone is preferably at least 1400 °C, preferably at least 1500 °C. In case a cycle according to the present invention is a collapsing cycle, the temperature of the hot zone is preferably at least 1700 °C, preferably at least 1800 °C, more preferably at least 1900 °C. In case a cycle according to the present invention is an etching and collapsing cycle, the temperature of the hot zone is preferably at least 1700 °C, preferably at least 1800 °C, more preferably at least 1900 °C. In an embodiment, the maximum temperature of the hot zone is 2100 °C, more preferably 2050 °C, such as 2000 °C.

The furnace used for the etching and collapsing process may be any furnace suitable for that purpose, such as a high temperature induction furnace or electrical resistance furnace. It is preferred that the furnace effects rotation-symmetrical heating of the deposited tube that is present in the central aperture of said furnace in order to prevent axial and radial stresses occurring in the deposited tube. In an embodiment, said rotation-symmetrical heating is carried out by rotating in axial direction the deposited tube inside the central aperture of the furnace.

The translational speed of movement of the furnace and/or the deposited tube with respect to the other is preferably between 15 and 45 mm/second, more preferably between 25 and 35 mm/second. The deposited tube is preferably rotated around it axis with a rotational speed of at least 10 revolutions per minute, preferably at least 15 revolutions per minute, such as between 20 and 35 revolutions per minute, e.g. 25 revolutions per minute.

The temperature of the hot zone will ensures that the process of etching will take place by disassociation of the fluorine-containing gas to fluorine ions. Without wishing to be bound by any theory, the inventors presume that these fluorine ions will react with the silica on the outside surface of the deposited tube to form $SiF_4$ and $CO_2$. In other words, $SiO_2$ is removed from the outside surface of the deposited tube and any impurities that are present inside of that glass will be freed and will be carried out with the stream of gas and will hence be removed from the outside surface and outer glass layers of the deposited tube.

The fluorine-containing gas may be present in the annular region or space between the central aperture furnace and the outside surface of the deposited tube over the length of the furnace, viz. in the region of the hot zone and on both axial sides of the hot zone. However, only when the temperature is sufficient - viz. at least 1400 °C, will there be a good effect of etching; which will be in the hot zone. Any fluorine-containing gas that is not activated to provide an etching effect will be removed from the furnace together with any gasses formed during the etching process (such as $CO_2$ and $SiF_4$), e.g. by a decreased pressure duct or a vacuum pump located an one or both ends of the furnace. This will ensure safe removal of any hazardous gases.

From WO02/40415 is known an apparatus and process for flushing the space between the heating element and the deposited tube with an inert gas. From US 5,970,083 is known an apparatus comprising a graphite element. The apparatuses as disclosed in these two publications may also be used in the method according to the present invention. However, other apparatus may also be used. Both publications and especially the description of the apparatuses are incorporated by reference into the present application.

In an embodiment of the present invention, an induction furnace is used having a graphite liner on the inside surface of the furnace adjacent the central aperture and hence the annular region between the outside surface of the deposited tube and the central aperture of the furnace. Said graphite liner may comprise a plurality of holes; such an apparatus is known in the art, e.g. from US 5,970,083 as discussed above. The fluorine-containing gas is preferably supplied to the annular region through the holes in the graphite liner.

The fluorine-containing gas is supplied during at least a part of at least one cycle preferably during the complete or full cycle from the one end to the reversal point at the other end and back. In an embodiment, the fluorine-containing gas is supplied only when the furnace is between certain longitudinal positions in view of the ends of the available length or for example only during the forward or only during the back movement.

It should be noted that only the middle portion of a deposited tube is collapsed, called the available length. The remaining parts on both sides are used to mount (clamp) the deposited tube on the lathe. Alternatively handles may be used to elongate the tube on both sides and the elongated tube is mounted with both handles on the lathe.

The fluorine-containing gas is preferably supplied in an amount of at least 100 sccm (standard cubic centimeter per minute) under standard conditions (20 °C; 1 atmosphere), more preferably at least 150 sccm, such as 200 sccm. The fluorine-containing gas is preferably supplied as a mixture with an inert gas, such as argon.

During a collapsing cycle an inert gas is used to flush the annular region between the outside of the deposited tube and the inside of the furnace. The flow of said inert gas may for example be at least 20 slm (standard liter per minute), such as at least 30 slm, preferably between 30 and 50 slm, for example 40 slm in a collapsing cycle.

In an etching cycle or a simultaneous etching and collapsing cycle the total gas flow (either pure fluorine-containing gas(es) or a mixture of fluorine-containing gas(es) and an inert gas) is at least 20 slm (standard liter per minute), such as at least 30 slm, preferably between 30 and 50 slm, for example 40 slm.

During an etching and collapsing cycle, the fluorine-containing gas is preferably added into said inert gas; or part of the amount of inert gas is replaced by the fluorine-containing gas. In other words, a mixture of a fluorine-containing gas and an inert flushing gas is used. However, the inert gas may also be completely replaced by one or more fluorine-containing gases. In a preferred embodiment a mixture of 200 sccm Freon in 40 slm argon is used.

In an embodiment, the amount of fluorine-containing gas is substantially the same during the duration of the cycle. In an embodiment, when the fluorine-containing gas is supplied during more than one cycle, the amount of the fluorine-containing gas is substantially the same during each of these cycles.

In an embodiment, the amount of fluorine-containing gas is variable during the cycle. In other words, the amount of fluorine-containing gas varies at a function of the axial position. If may for example be reduced near the reversal point of the furnace.

In an embodiment, the etching step provides a primary preform having a reduced diameter in view of a primary preform that would have undergone the same collapsing treatment without etching. In other words, the etching removes glass (silica) from the outer surface of the deposited tube and decreases the outer diameter thereof.

The decrease in outer diameter due to etching can be determined by a cross section area (CSA) measurement; by calculating the difference between the CSA of the deposited tube before collapsing and etching and the CSA of the primary preform obtained.

The cross-sectional area for the deposited tube ($CSA_{dp}$) can be calculated as follows:

$$CSA_{dp} = \frac{\pi}{4}\left(d_u^2 - d_i^2\right)$$

wherein $d_u$ is the outer diameter of the deposited tube and wherein $d_i$ is the inner diameter of the deposited tube.

The cross-sectional area for the primary preform ($CSA_p$) can be calculated as follows:

$$CSA_p = \frac{\pi}{4}\left(d_p^2\right)$$

wherein $d_p$ is the outer diameter of the primary preform.

The decrease in CSA in by etching ($CSA_\Delta$) is calculated as follows:

$$CSA_\Delta = CSA_{dp} - CSA_p = \left[\frac{\pi}{4}\left(d_u^2 - d_i^2\right)\right] - \left[\frac{\pi}{4}\left(d_p^2\right)\right]$$

The decrease in CSA ($CSA_\Delta$) is in an embodiment at least 5 mm². The decrease in CSA ($CSA_\Delta$) is in an embodiment at least 10 mm². The decrease in CSA ($CSA_\Delta$) is in an embodiment at least 15 mm².

The present invention is suitable for deposited tubes prepared to make multimode optical fibers or to make single mode optical fibers.

The present invention does not required significant changes to the instrumental setup or apparatus that are already in use. Therefore, the solution to the problem presented in the present invention are easy and cost-effective to implement.

The present invention will now be explained on the basis of a number of examples, in which connection it should be noted, however, that the present invention is by no means limited to such special examples.

### Examples

In order to prove the concept of the present invention two deposited tubes were subjected to the same collapsing cycles with and without an etching gas. The etching gas was only supplied during certain longitudinal positions to clearly see the effect as well as a possible lag.

Comparative Example 1

A multimode deposited tube having an outer diameter of 46 millimeter was introduced into a collapsing lathe. Collapsing was carried out with an electrical resistance furnace, having a graphite liner provided with holes; said furnace providing a hot zone having a width of approximately 10 cm and a temperature of 2000 °C. The furnace was moved over the deposited tube with a translation speed of 20 millimeters per minute. The deposited tube was rotated within the furnace with a rotational speed of 25 revolutions per second. The collapsing was carried in three collapsing cycles wherein no etching gas was supplied. The remaining gases where removed by means of a line having a reduced pressure of approx. 0.9 bar. After the collapsing process a solid rod, the primary preform is obtained which is subjected to a CSA measurement wherein the CSA value is obtained for each axial position. The $CSA_\Delta$ was 0 mm².

Example 1

A multimode deposited tube having an outer diameter of 46 millimeter was introduced into a collapsing lathe. Collapsing was carried out with an electrical resistance furnace having a graphite liner provided with holes; said furnace providing a hot zone having a width of approximately 10 cm and a temperature of 2000 °C. The furnace was moved over the deposited tube with a translation speed of 20 millimeters per minute. The deposited tube was rotated within the furnace with a rotational speed of 25 revolutions per second. The collapsing was carried in three simultaneous etching and collapsing cycles Freon gas ($C_2F_6$) 200 sccm and argon 40 slm were introduced through the holes in the graphite liner of the furnace when the furnace was between certain axial positions millimeters with respect to the start/stop position of the furnace. The remaining gases where removed by means of a line having a reduced pressure of approx. 0.9 bar. After the collapsing process a solid rod, the primary preform is obtained which is subjected to a CSA measurement wherein the CSA value is obtained for each axial position. The CSA was considerably reduced for the primary preform according to Example 1 between the axial positions when etching was carried out; the $CSA_\Delta$ was 15 mm². This shows that the etching process according to the present invention is able to remove part of the outer surface glass of the deposited tube during the collapsing process and simultaneously remove any impurities contained in said glass. A lag of approximately 100 millimeter was observed after the start and end of the addition of the fluorine-containing gas.

Example 2

A multimode deposited tube having an outer diameter of 46 millimeter was introduced into a collapsing lathe. Collapsing and etching were carried out with an electrical resistance furnace having a graphite liner provided with holes; said furnace providing a hot zone having a width of approximately 10 cm and a temperature of 2000 °C for collapsing and a temperature of 1500 °C for etching. The furnace was moved over the deposited tube with a translation speed of 20 millimeters per minute. The deposited tube was rotated within the furnace with a rotational speed of 25 revolutions per second. The collapsing was carried in two etching cycles and subsequently three collapsing cycles. During the etching cycles Freon gas ($C_2F_6$) 200 sccm and argon 40 slm were introduced through the holes in the graphite liner of the furnace when the furnace was between certain axial positions millimeters with respect to the start/stop position of the furnace. The remaining gases where removed by means of a line having a reduced pressure of approx. 0.9 bar. After the collapsing process a solid rod, the primary preform having an overall outer diameter of approximately 34 millimeter is obtained which is subjected to a CSA measurement wherein the CSA value is obtained for each axial position. The CSA was reduced for the primary preform according to Example 2 between the axial positions when etching was carried out; the $CSA_\Delta$ was 11 mm$^2$.

Therefore, one or more aims of the present invention mentioned above have been reached. More embodiments of the present invention are cited in the appended claims.

**Claims**

1. A method for preparing a primary preform for an optical fiber by etching and collapsing a deposited tube, said deposited tube being a tube comprising or being made of vitrified silica layers, wherein at least some of the vitrified silica layers comprise a dopant, the method comprising the steps of

   * mounting a deposited tube on a lathe and introducing the deposited tube into a central aperture of a furnace mounted on the lathe wherein the furnace and the deposited tube are movable in axial direction with respect to each other;
   * creating within the furnace a hot zone that moves in translation back and forth over the length of the deposited tube during one or more cycles wherein:

     - during at least one cycle at least part of the outside of the deposited tube is etched by supplying a fluorine-containing etching gas to the annular region between the deposited tube and the central aperture of the furnace; and
     - during at least one cycle the deposited tube is collapsed;

   in order to obtain a primary preform.

2. The method according to claim 1, comprising i) at least one etch cycle wherein the outside of the deposited tube is etched followed by at least one collapsing cycle wherein the deposited tube is collapsed or ii) at least one etch and collapsing cycle wherein the outside of the deposited tube is etched and simultaneously collapsed.

3. The method according to any one of the preceding claims, comprising at least two cycles, preferably between 3 and 5 cycles.

4. The method according to any one of the preceding claims, wherein fluorine-containing gas is supplied during at least part of at least one cycle, preferably during the complete cycle(s).

5. The method according to any one of the preceding claims, wherein fluorine-containing etching gas is selected from $C_2F_6$, $C_4F_8$, $CF_4$, $CCl_2F_2$, $SF_6$, $NF_3$, $F_2$, and is preferably $C_2F_6$, and/or wherein the fluorine-containing gas is free of oxygen, more preferably having an oxygen content of less than 1 ppm.

6. The method according to any one of the preceding claims, wherein fluorine-containing gas is mixed with an inert gas, preferably argon and/or wherein the fluorine-containing gas and said inert gas are free of oxygen, more preferably having an oxygen content of less than 1 ppm.

7. The method according to any one of the preceding claims, wherein translation speed of movement is between 15 and 45 mm/second, more preferably between 25 and 35 mm/second.

8. The method according to any one of the preceding claims, wherein the deposited tube is prepared by inside chemical vapor deposition of a tube, preferably a glass tube, more preferably a quartz tube.

9. The method according to any one of the preceding claims, wherein the temperature of the hot zone during an etch cycle wherein the outside of the deposited tube is etched is at least 1400 ° C, preferably at least 1500 °C.

10. The method according to any one of claim 2 i) and claims 3-10, wherein the temperature of the hot zone during a collapsing cycle wherein the deposited tube is collapsed is at least 1700 °C, preferably at least 1800 °C, more preferably at least 1900 °C.

11. The method according to any one of claim 2 ii) and claims 3-10, wherein the temperature of the hot zone during an etch and collapsing cycle wherein the deposited tube is etched and collapsed is at least 1700 °C, preferably at least 1800 °C, more preferably at least 1900 °C.

12. The method according to any one of the preceding claims, wherein the annular region is free of oxygen during the cycles.

13. A method of manufacturing an optical fiber comprising preparing a primary preform according to any of the preceding claims, preparing a final preform from the obtained primary preform, and subsequently drawing said final preform into an optical fiber.

**Patentansprüche**

1. Verfahren zur Vorbereitung einer primären Vorform für eine optische Faser durch Ätzen und Zusammenfallen einer deponierten Röhre, wobei es sich bei der deponierten Röhre um eine Röhre handelt, die aus verglasten Silica-Schichten besteht oder diese umfasst, wobei zumindest manche der verglasten Silica-Schichten einen Dotand umfassen, wobei das Verfahren die Schritte aufweist:

   * Montieren einer deponierten Röhre auf einer Drehbank und Einführen der deponierten Röhre in eine zentrale Öffnung eines auf der Drehbank montierten Ofens, wobei der Ofen und die deponierte Röhre in axialer Richtung zueinander bewegbar sind;
   * Erzeugen einer heißen Zone innerhalb des Ofens, die sich während eines oder mehrerer Zyklen in Translation über die Länge der deponierten Röhre hin und her bewegt, wobei:

   - während mindestens eines Zyklus mindestens ein Teil der Außenseite der deponierten Röhre durch Zuführen von fluorhaltigem Ätzgas zu dem ringförmigen Bereich zwischen der deponierten Röhre und der zentralen Öffnung des Ofens geätzt wird; und
   - während mindestens eines Zyklus die deponierte Röhre zusammenfällt;

   um eine primäre Vorform zu erhalten.

2. Verfahren nach Anspruch 1, umfassend i) mindestens einen Ätzzyklus, bei dem die Außenseite der deponierten Röhre geätzt wird, gefolgt von mindestens einem Zusammenfallzyklus, bei dem die deponierte Röhre zusammenfällt, oder ii) mindestens einem Ätz- und Zusammenfallzyklus, bei dem die Außenseite der deponierten Röhre geätzt wird und gleichzeitig zusammenfällt.

3. Verfahren nach einem der vorhergehenden Ansprüche, umfassend mindestens zwei Zyklen, vorzugsweise zwischen 3 und 5 Zyklen.

4. Verfahren nach einem der vorhergehenden Ansprüche, wobei das fluorhaltige Gas während mindestens eines Teils mindestens eines Zyklus, vorzugsweise während des vollständigen Zyklus (der vollständigen Zyklen), zugeführt wird.

**5.** Verfahren nach einem der vorhergehenden Ansprüche, wobei das fluorhaltige Ätzgas aus $C_2F_6$, $C_4F_8$, $CF_4$, $CCl_2F_2$, $SF_6$, $NF_3$, $F_2$ und vorzugsweise $C_2F_6$ ausgewählt ist und/oder wobei das fluorhaltige Gas frei von Sauerstoff ist, besonders bevorzugt einen Sauerstoffgehalt von weniger als 1 ppm aufweist.

**6.** Verfahren nach einem der vorhergehenden Ansprüche, wobei fluorhaltiges Gas mit einem Inertgas, vorzugsweise Argon, gemischt wird und/oder wobei das fluorhaltige Gas und besagtes Inertgas frei von Sauerstoff sind, besonders bevorzugt einen Sauerstoffgehalt von weniger als 1 ppm aufweisen.

**7.** Verfahren nach einem der vorhergehenden Ansprüche, wobei die Translationsgeschwindigkeit der Bewegung zwischen 15 und 45 mm/Sekunde, bevorzugt zwischen 25 und 35 mm/Sekunde, liegt.

**8.** Verfahren nach einem der vorhergehenden Ansprüche, wobei die deponierte Röhre durch innere chemische Aufdampfung einer Röhre, vorzugsweise einer Glasröhre, besonders bevorzugt einer Quarzröhre, vorbereitet wird.

**9.** Verfahren nach einem der vorhergehenden Ansprüche, wobei die Temperatur der heißen Zone während eines Ätzzyklus, bei dem die Außenseite der deponierten Röhre geätzt wird, mindestens 1400°C, vorzugsweise mindestens 1500°C, beträgt.

**10.** Verfahren nach einem der Ansprüche 2 i) und den Ansprüchen 3 bis 10, wobei die Temperatur der heißen Zone während eines Zusammenfallzyklus, bei dem die deponierte Röhre zusammenfällt, mindestens 1700°C, vorzugsweise mindestens 1800°C, besonders bevorzugt mindestens 1900°C, beträgt.

**11.** Verfahren nach einem der Ansprüche 2 ii) und den Ansprüchen 3 bis 10, wobei die Temperatur der heißen Zone während eines Ätz- und Zusammenfallzyklus, bei dem die deponierte Röhre geätzt wird und zusammenfällt, mindestens 1700°C, vorzugsweise mindestens 1800°C, besonders bevorzugt mindestens 1900°C, beträgt.

**12.** Verfahren nach einem der vorhergehenden Ansprüche, wobei der ringförmige Bereich während der Zyklen frei von Sauerstoff ist.

**13.** Verfahren zum Herstellen einer optischen Faser umfassend Vorbereiten einer primären Vorform gemäß einem der vorhergehenden Ansprüche, Vorbereiten einer finalen Vorform aus der erhaltenen primären Vorform und anschließendes Ziehen der finalen Vorform in eine optische Faser.

**Revendications**

**1.** Procédé pour préparer une préforme primaire pour une fibre optique par gravure et affaissement d'un tube obtenu par dépôt, ledit tube obtenu par dépôt étant un tube comprenant ou étant constitué de couches de silice vitrifiée, où au moins certaines des couches de silice vitrifiée comprennent un dopant, le procédé comprenant les étapes consistant :

* à monter un tube obtenu par dépôt sur un tour et à introduire le tube obtenu par dépôt dans une ouverture centrale d'un four monté sur le tour où le four et le tube obtenu par dépôt sont mobiles dans la direction axiale l'un par rapport à l'autre ;
* à créer à l'intérieur du four une zone chaude qui se déplace en translation en va-et-vient sur la longueur du tube obtenu par dépôt pendant un ou plusieurs cycle(s) où :

- pendant au moins un cycle, au moins une partie de l'extérieur du tube obtenu par dépôt est gravée en fournissant un gaz de gravure contenant du fluor à la région annulaire entre le tube obtenu par dépôt et l'ouverture centrale du four ; et
- pendant au moins un cycle, le tube obtenu par dépôt est affaissé ;

afin d'obtenir une préforme primaire.

**2.** Procédé selon la revendication 1, comprenant i) au moins un cycle de gravure dans lequel l'extérieur du tube obtenu par dépôt est gravé suivi d'au moins un cycle d'affaissement où le tube obtenu par dépôt est affaissé ou ii) au moins un cycle de gravure et d'affaissement dans lequel l'extérieur du tube obtenu par dépôt est gravé et simultanément affaissé.

3. Procédé selon l'une quelconque des revendications précédentes, comprenant au moins deux cycles, de préférence entre 3 et 5 cycles.

4. Procédé selon l'une quelconque des revendications précédentes, dans lequel un gaz contenant du fluor est fourni pendant au moins une partie d'au moins un cycle, de préférence pendant le/les cycle(s) complet(s).

5. Procédé selon l'une quelconque des revendications précédentes, dans lequel un gaz de gravure contenant du fluor est choisi parmi $C_2F_6$, $C_4F_8$, $CF_4$, $CCl_2F_2$, $SF_6$, $NF_3$, $F_2$ et est de préférence $C_2F_6$, et/ou dans lequel le gaz contenant du fluor est exempt d'oxygène, plus préférablement ayant une teneur en oxygène inférieure à 1 ppm.

6. Procédé selon l'une quelconque des revendications précédentes, dans lequel le gaz contenant du fluor est mélangé avec un gaz inerte, de préférence de l'argon et/ou dans lequel le gaz contenant du fluor et ledit gaz inerte sont exempts d'oxygène, plus préférablement ayant une teneur en oxygène inférieure à 1 ppm.

7. Procédé selon l'une quelconque des revendications précédentes, dans lequel la vitesse de mouvement de translation est comprise entre 15 et 45 mm/seconde, plus préférablement entre 25 et 35 mm/seconde.

8. Procédé selon l'une quelconque des revendications précédentes, dans lequel le tube obtenu par dépôt est préparé par dépôt chimique interne en phase vapeur d'un tube, de préférence un tube de verre, plus préférablement un tube de quartz.

9. Procédé selon l'une quelconque des revendications précédentes, dans lequel la température de la zone chaude pendant un cycle de gravure, dans lequel l'extérieur du tube obtenu par dépôt est gravé, est d'au moins 1400°C, de préférence d'au moins 1500°C.

10. Procédé selon l'une quelconque des revendications 2 i) et 3 à 10, dans lequel la température de la zone chaude pendant un cycle d'affaissement, dans lequel le tube obtenu par dépôt est affaissé, est d'au moins 1700°C, de préférence d'au moins 1800°C, plus préférablement d'au moins 1900°C.

11. Procédé selon l'une quelconque des revendications 2 ii) et 3 à 10, dans lequel la température de la zone chaude pendant un cycle de gravure et d'affaissement, dans lequel le tube obtenu par dépôt est gravé et affaissé, est d'au moins 1700°C, de préférence d'au moins 1800°C, plus préférablement d'au moins 1900°C.

12. Procédé selon l'une quelconque des revendications précédentes, dans lequel la région annulaire est exempte d'oxygène pendant les cycles.

13. Procédé de fabrication d'une fibre optique comprenant la préparation d'une préforme primaire selon l'une des revendications précédentes, la préparation d'une préforme finale à partir de la préforme primaire obtenue, et ensuite l'étirage de ladite préforme finale en une fibre optique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5970083 A
- WO 2004043870 A
- US 20080028799 A1
- JP H01183433 B
- EP 0117009 A
- WO 0240415 A